# EUROPEAN PATENT SPECIFICATION

(11) **EP 4 495 905 B1**
(45) Date of publication and mention of the grant of the patent: **04.02.2026**
(21) Application number: 23187082.5
(22) Date of filing: 21.07.2023
(51) Int. Cl.: G08B 21/02

(54) **METHOD, SYSTEM AND DEVICE FOR AUTONOMOUSLY IDENTIFYING AN EMERGENCY**
VERFAHREN, SYSTEM UND VORRICHTUNG ZUR AUTONOMEN NOTFALLIDENTIFIZIERUNG
PROCÉDÉ, SYSTÈME ET DISPOSITIF D'IDENTIFICATION AUTONOME D'UNE URGENCE

(43) Date of publication of application: 22.01.2025
(73) Proprietor: Unify Beteiligungsverwaltung GmbH & Co. KG, 81739 München (DE)
(72) Inventor: Christidis, Georgios, 17456 Alimos (GR); Chronopoulos, Mikes, 17122 Nea Smyrni (GR); Piliafas, Alexandros, 17343 Agios Dimitrios (GR); Tsapikounis, Sotirios, 17122 Nea Smyrni (GR)
(74) Representative: Schaafhausen, Anne

(56) References cited:
- US-A1- 2019 051 144
- US-B1- 10 681 521
- US-B1- 10 943 463

## Description

The present invention relates to a method of nearby devices autonomously identifying and validating an emergency situation and automatically calling emergency services, a system which is adapted to perform said method and at least one device which can perform the inventive method.

In more detail, the present invention relates to the problem, that arises when an emergency occurs in an area where there is no central authority to report it.

Currently, systems are known where a communication device activates an automatic emergency contact protocol using a mobile station. Therefore, the location information is automatically determined and tracked. An emergency notification server stores the data associated with the event and generates an automated emergency call.

Moreover, computer-implemented methods for generating an automated response to a catastrophic event that includes data generated and received from home sensors are known. These methods determine whether the data indicates a match to the threshold pattern and automatically generating a response if there is a match to the threshold pattern.

Further, it is already known that non-transitory computer-readable media can determine a geographical area associated with a crisis.

However, the known methods and systems depend on a central system, or a computer-controlled database that stores and controls the emergency information and acts upon emergency identification.

US 10 943 463 B1 discloses a method and system for personal emergency assistance. One example of this method can include the following steps:
- detecting a need for assistance associated with a user;
- determining a location associated with the user and a type of assistance needed;
- selecting a communications interface on a device associated with the user for transmitting an assistance request over a network;
- transmitting, to a destination system associated with an assistance service, the assistance request via the communications interface selected. The assistance request specifies the location associated with the user and the type of assistance needed.

The method also includes exchanging assistance updates between the device and the destination system. These updates include location updates, event updates, the status of the assistance request, and/or the status of the assistance response. Finally, the device provides assistance information comprising at least a portion of these updates via its display and/or speaker.

US 10681 521 B1 discloses a method and apparatus that offer a distributed, and decentralized emergency notification and response system. This system informs and engages the people in the immediate vicinity of the person requiring assistance. It also enables the dissemination of more detailed information than conventional emergency services systems provide.

US 2019/051144 A1 discloses a system for determining the occurrence of an event and for issuing notifications in response . The system comprises a first component for storing reference parameters for use in determining the occurrence of the event, and a sensor for determining real-time parameters that would be indicative of the occurrence of the event. The system also includes an analysis component for comparing the reference parameters and the real-time parameters. A communications component issues a notification when the event is detected, and an event-driven event management network is established in response.

Therefore, the present invention is based on the object to provide a method and system so that devices can communicate directly with each other and can act autonomously to call emergency services, if affected by a certain disaster.

This object is solved by a method having the features according to claim 1, a device having the features of claim 11, and a system having the features of claim 12.

Preferred embodiments of the invention are defined in the respective dependent claims.

Therefore, according to the invention, a method for autonomously identifying an emergency is provided, wherein the method comprises the steps of:
- monitoring, by an application of a first device, sensor data from at least one sensor of or connected to the first device,
- detecting or receiving, by the application of the first device, an abnormality in the sensor data of the at least one sensor,
- initiating abnormality state and storing, by the application of the first device, the abnormal sensor data from the at least one sensor,
- generating, by the application of the first device, a message comprising the abnormal sensor data,
- broadcasting, by the application of the first device, the generated message to all further devices over all types of available networks.

In the field of information technology (IT), the term "application" typically refers to a software program or computer program that is designed to perform specific tasks or functions to meet the needs of the present claimed invention. An application, also known as a software application or simply an "app," is a set of instructions or code written by software developers that is executed by a computer to perform a specific function or provide a specific service.

The present used application enables sensor data to be processed in accordance with the present methods. This application may be installed in whole or in part on a device or stored on a server or in a cloud.

In case the application of the first device detects or receives an abnormality in sensor data of at least one sensor, the application of the first device initiates an event.

For the purposes of the invention, at least one sensor means a sensor that can be installed inside the first device (internal sensor) or outside of it (external sensor). However, an external sensor is at least partially connected to the first device in order to transmit sensor data to it using known transmission techniques.

In other words, when a sensor of a device detects an abrupt change in the state of environmental attribute(s), an abnormality state is initiated, and an application on this device initiates an event by sending a message to report the abnormality state. Thus, an event is a message. This event sets the device into an emergency state, and a message which contains the state of the device, the type of the alarm event and the time it is generated.

This generated message is being broadcasted by each device to any of the nearby connected devices over all available types of networks.

According to a preferred embodiment, the method further comprises the step of checking, by the application of the first device, all available types of networks.

Networks by means of the present invention relate to all types of communication networks. Communication networks refer to the infrastructure and systems that enable the exchange of information and data between multiple devices, systems, or users. Communication networks can be physical or virtual, wired or wireless, and can vary in size, complexity, and scope, ranging from local area networks (LANs) to global wide area networks (WANs). Communication networks are the backbone of modern information and communication technology (ICT) systems, enabling seamless communication, data transfer, and collaboration among devices, systems, and users.

The physical or virtual connections that allow data to be transmitted between nodes in the network, can be wired, such as Ethernet cables or fiber optic cables, or wireless, such as Wi-Fi or cellular connections. Cellular connection, such as 5G, refers to a wireless communication technology that enables devices to connect to the internet and other devices via cellular networks. Cellular networks consist of a series of interconnected cells, each served by a base station or cell tower, which provide wireless coverage to a specific area. Devices, such as smartphones, tablets, Internet of Things (loT) devices, and other mobile devices, communicate with these base stations to establish a cellular connection and access the internet and other services.

All smart devices located in the same vicinity communicate via established methods over any available type of physical or virtual connection. The devices are connected in a mesh network and can detect abnormalities.

Each smart device can exchange appropriately constructed messages with other devices over an established and available network. For example, the smart devices in a building are connected to an already established wireless mesh network (WMN) and can detect abnormalities via built-in sensors. In case, a connection type, e. g. Wi-Fi, is not available, the devices will still exchange messages via the rest of the available networks, e. g. via Bluetooth (BT) or a cellular network.

In case a communication network is not available, the broadcasting mechanism uses other available networks. The area in which this message is being broadcasted is defined by the range capabilities of each available communication protocol and the coverage it can offer under any circumstances. This way, it is ensured that only nearby devices will act accordingly during an emergency situation in a specific area.

According to another preferred embodiment, the network is a communication network, in particular, the communication network is one or more of a Wireless mesh network (WMN), a Wi-Fi network, a Bluetooth network, a cellular network, a data network, a telecommunications network, local area networks (LAN), and Wide Area Network (WAN).

In particular, the cellular network is a broadband cellular network such as a 4G network, a 5G network, and/or a 6G network.

The method further comprises the steps of:
- receiving a message, by the application of the first device, comprising abnormal sensor data of at least one sensor of a second or any further device,
- validating, by the application of the first device, the abnormal sensor data of the first device, with the abnormal sensor data of the received message, and
- automatically initiating, by the application of the first device, a call to an emergency service, in case of a match of the validated data.

Therefore, the devices such as the first device can generate and receive messages about abnormal sensor data from the nearby devices reachable over all available networks.

In case the device receives a message from one of a nearby device connected to the same network, a validation of the message contents takes place to check if the abnormality "state", "alarm" and "time" reported by the other devices match the data of the state of the device itself. If there is a match, the abnormality state is confirmed for each connected device, the broadcasting stops, and the device has now realized that an emergency situation has occurred in the vicinity and proceeds with calling emergency services.

Emergency services are a collection of specialized services that are responsible for responding to urgent situations that pose an immediate threat to life, health, property, or the environment. Examples for emergency services are Emergency Medical Services (EMS), Fire and Rescue, Law Enforcement (e. g. police departments), Search and Rescue, and Emergency Management.

In addition to this automatic call, the user of the first device can also receive an alert, informing the user that an emergency service is being called automatically and the reason why.

The present method further comprises the steps of:
- initiating, by the application of the first device, an alarm to the first device, in case of no match of the validated data,
- automatically initiating, by the application of the first device, a call to an emergency service, in case the alarm is not deactivated by the user of the first device.

As a fallback mechanism, if no other nearby devices are connected while the device is broadcasting the message, and after a pre-defined period of not receiving any message from other devices, the user of the device will be notified with a device alarm or message, waiting for the user to confirm or deny the emergency. If the user interacts with the alarm and rejects the message, the device assumes that there is no emergency affecting that user. If there is no confirmation or rejection from the user, the device proceeds to call emergency services.

The pre-defined period of not receiving messages from other devices can be in a range between 10 seconds and 5 minutes, preferably in a range between 30 seconds and 2 minutes, and more preferably in 60 seconds.

An alarm of the device refers to a feature or function that allows the device to emit a sound, a vibration, or a visual notification at a pre-determined time or under specific conditions. It is typically used to alert the user or draw their attention to a particular event, such as notifying them of an incoming message or call.

The alarm can be deactivated by any interaction of the user with the first device.

Further, according to a preferred embodiment, the method further comprises the steps of returning, by the application of the first device, the first device into an initial idle state, in case the alarm is deactivated by the user of the first device.

The initial idle state of a smart device refers to the state of the device when neither an abnormality in the sensor data has been detected nor a message has been received comprising abnormal sensor data of at least one sensor of a second or any further device so that the application of the device is not actively being used or performing any specific tasks.

According to yet another preferred embodiment, the first, the second, and any further device is a smart device.

A smart device, also known as a connected or Internet of Things (IoT) device, refers to a device that is capable of connecting to the Internet or other devices and has built-in intelligence, computing power, and communication capabilities. Smart devices can be standalone devices or part of a larger network of interconnected devices, and they are designed to enhance and simplify various aspects of everyday life by offering advanced features, automation, and connectivity. At least one sensor is built into the smart device.

Examples of smart devices include smartphones, smartwatches, smart speakers, smart thermostats, smart lights, smart TVs, smart appliances such as refrigerators, ovens, washing machines, and vacuum cleaners which are connected to the Internet and can be controlled or monitored remotely, smart security systems, smart transportation, such as cars, bikes, aircrafts, ships, trains, and smart health and fitness devices, such as fitness trackers or smart scales, among others.

Further, IoT sensors are installed in buildings, machinery, transport mediums like aircrafts, ships, trains, etc., monitor several environmental attributes like altitude, humidity, temperature, and/or pressure. Sensors can also detect chemical or gas leakage, smoke as well as abrupt changes in level when accelerometer, gyroscope and motion sensors are used.

These are just some examples of the many types of smart devices that are available today. As technology continues to advance, the list of smart devices is likely to expand, offering new and innovative ways to improve convenience, efficiency, and connectivity in various aspects of our daily lives.

According to another preferred embodiment, the stored abnormal sensor data comprises a flag indicating the state of the first device regarding the abnormal sensor data, a type of the alarm with regard to an environmental attribute, and a time at which the abnormal sensor data was generated.

These abnormal sensor data are stored by the application of the first device. Further the application of the first device generates a message comprising these abnormal sensor data. Further, the application of the first device may receive a message from a second or any further device also comprising these abnormal sensor data.

In more detail, the generated message of the first, the second or any further device as well as the stored abnormal sensor data comprise:
a. the state of the device: State Abnormality (SA): "state" = true/false,
b. the type of alarm that caused the event: "alarm" = gas/temperature/altitude, etc.,
c. the time the alarm was generated: "time" = hh:mm:ss

In the context of IT, the term "flag" refers to a binary or Boolean value used to indicate a certain condition or state in a computer program or system. Flags are typically used as variables or data elements that hold a single value, typically either "true" or "false", to represent a specific condition or state. The state of the device indicates whether there is a state abnormality or not, i. e. whether if the state is "true" or "false".

The type of alarm indicates the reason why an abnormality is present. For example, the type may be any environmental attribute which can be detected via sensors of smart devices, such as gas, temperature, or smoke.

The time indicates when the alarm was generated.

According to a preferred embodiment, the application of the first device detects amendments of environmental attributes using a sensor of the first device, wherein the environmental attribute is one or more of altitude, humidity, temperature, pressure, chemicals, gas, smoke, level, acceleration, and motion.

Abnormality in sensor data refers to readings or measurements obtained from a sensor that deviate significantly from the expected or normal values. In the context of a sensor that detects altitude, humidity, temperature, pressure, chemicals, gas, smoke, level, accelerometer, gyroscope, and motion in the sensor data could manifest in various ways depending on the type of sensor and the environmental conditions in which it is deployed.

Thus, an abnormality in the sensor data from, e. g. humidity sensors, or temperature sensors, by means of the present invention result in readings that are significantly higher or lower than the expected humidity range or temperature range for a given environment.

An abnormality in the sensor data from an altitude sensor by means of the present invention can be due to changes in environmental conditions such as changes in atmospheric pressure or temperature.

An abnormality in the sensor data from a humidity sensor by means of the present invention can be due to changes in environmental conditions such as moisture sources or ventilation.

An abnormality in the sensor data from a temperature sensor by means of the present invention can be due to external factors such as heat sources or environmental changes.

An abnormality in the sensor data from a pressure sensor by means of the present invention can be due to changes in environmental conditions such as altitude or weather patterns.

Abnormalities in the sensor data from chemical and gas sensors by means of the present invention result in readings that indicate unexpected levels of chemical or gas concentrations in the environment. This can be due to changes in environmental conditions.

An abnormality in the sensor data from a smoke sensor by means of the present invention leads to false positive or false negative results in detecting the presence or absence of smoke in the environment.

An abnormality in the sensor data from a level sensor by means of the present invention results in readings that do not accurately represent the actual level of a liquid or solid substance being measured. This can be due to changes in the physical properties of the substance being measured.

Abnormalities in the sensor data from accelerometers and gyroscopes by means of the present invention result in readings that do not accurately represent the actual motion or orientation of an object. This could be due to abrupt height changes, e. g. a person falling to the ground.

Detecting abnormality in sensor data is an important task in sensor-based systems as it can help identify potential issues or anomalies in the sensor measurements. Techniques such as statistical analysis, data filtering, data fusion, and machine learning algorithms can be used to detect abnormality in sensor data and take appropriate actions based on the specific requirements of the application or system in which the sensors are deployed.

According to a yet another preferred embodiment, the validation step comprises comparing, by the application of the first device, the stored abnormal sensor data of the first device with the received abnormal sensor data from the message of a second or any further device, and/or wherein the compared abnormal sensor data comprise the state of the device, the type of alarm related to an environmental attribute, and the time at which the abnormal sensor data was generated.

In the present application, validation is the process of verifying or confirming the data within the message generated by the first device against the data within the message received by the second or any further device.

With regard to the state of the device, a match is present if the flags indicating the state of the first and a second or any further device are the same, i. e. both flags indicate either "true" or "false".

Further, a match is present if the types of alarm related to an environmental attribute of the first and the second device are the same, i. e. both types relate to the same environmental attribute, for example temperature.

Moreover, a match is present if the times at which the abnormal sensor data were generated by the first and the second device are within a pre-defined time frame.

According to a preferred embodiment, the time frame is less than 60 seconds, preferably less than 30 seconds, more preferably less than 10 seconds.

For the validation to be successful, all three compared data must match.

As soon as one of the three data does not match, the validation is not successful.

According to a preferred embodiment, in case the validation matches, each connected device confirms the broadcasting stop.

Moreover, each of the first, second and/or further devices acts as a standalone entity which autonomously identifies, validates, and reports the emergency. Thus, each smart device located in a specific area acts as a standalone entity that detects an abnormality and communicates directly with other nearby smart devices and each one decides and acts upon emergency.

According to another aspect of the present invention, a device is provided which is configured to perform the above-described method for autonomously identifying an emergency.

According to yet another aspect of the present invention, a system for autonomously identifying an emergency is provided, wherein the system comprises at least two devices according to the above-mentioned aspect of the present invention.

According to yet another aspect of the present invention, a program element is disclosed, which when being executed by a processor is adapted to carry out steps of the above-described method.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the apparatus type claims and features relating to the method type claims are considered to be disclosed. The invention and embodiments thereof will be described below in further detail in connection with the drawing(s).
- Fig. 1: shows a flowchart of the method for autonomously identifying an emergency in a specific area and calling an emergency service according to an embodiment of the invention.
- Fig. 2: shows a schematic illustration of two smart devices receiving the same alarm from built-in sensors according to another embodiment of the invention.
- Fig. 3: shows a schematic illustration of three smart devices receiving alarms from a different loT- sensor according to another embodiment of the invention.
- Fig. 4: shows a schematic illustration of three smart devices receiving different or no alarms from a different loT- sensor according to another embodiment of the invention.

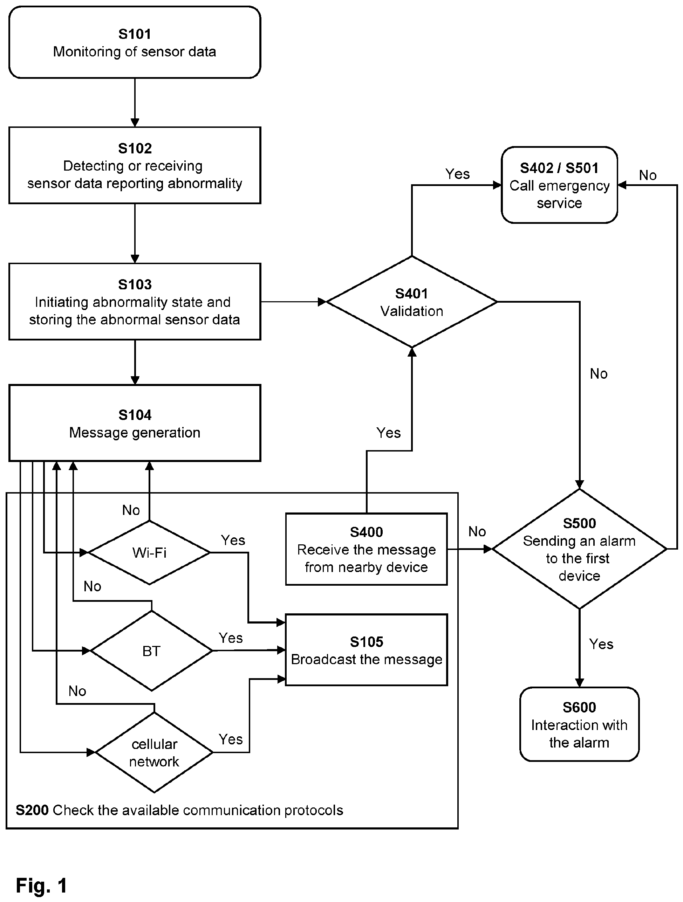

**Fig. 1** shows a flowchart of the method for autonomously identifying an emergency in a specific area and calling an emergency service.

First, built-in sensors of IoT devices, for example, in a building as well as built-in sensors of smart devices like smartphones and smartwatches are monitoring changes in the environment and other parameters (S101).

Second, a sensor detects an abrupt change in the state of the environmental attribute, or the smart device receives input from nearby loT sensors for an abrupt change of an environmental attribute (S102).

For example, during an earthquake, a high-rise building located in a non-urban isolated area collapses. Several people working in this building become affected. The smart device sensors installed in the building detect a sudden change of motion and altitude via its built-in gyroscope and accelerometer or, in another case, the smart device such as a smartphone of an individual receives input from nearby IoT sensors regarding a change in motion and altitude. In the first case, the smartwatches and smartphones people are using detect this sudden orientation and motion change and classify it as a fall of an individual via already existing implemented software. Depending on the device, the software can either be part of the operating system or be installed as an application on the device.

A software running on the smart device initiates an event by sending a message to report the abnormality state and stores the data (S103).

For example, the software installed and running on the loT sensors platform assures that the information collected by the sensors is transmitted to the smart devices, e. g. smartwatches and smartphones, via Wi-Fi or Bluetooth (BT). In addition, a specific software runs on the smart device and collects the data from the loT sensors (temperature increase), or the data generated by the smart device itself when the device detected the sudden fall.

Said data is stored to be later used by the validation mechanism (S401).

For example, assuming a smart device has detected a fall as soon as sensor data is collected, the software initiates an event and brings the device into a state of abnormality. At this state, the data describing the event is stored to be later used by the validation mechanism.

In a next step, when the device is in the abnormality state, the software of the device generates a message (S104) which includes the state of the device, whether it is in an abnormality state or not, the type of event, e. g. in this case an altitude alarm was triggered, and the time of the occurrence.

The generated message contains, for example:
a. the state of the device: State Abnormality (SA): "state" = true,
b. the type of alarm that caused the event: "alarm" = altitude,
c. the time of the alarm: "time" = 13:28:52.

As soon as the message is generated, the software checks, if the device is connected to a Wi-Fi network to which other smart devices are also connected (S200). If yes, then it broadcasts the generated event that contains the abnormality state message to any of the devices connected to the same Wi-Fi network (S105).

In case a Wi-Fi connection is not available, or in addition to the first available network such as Wi-Fi the software checks, if BT is available and if a connection to other devices exists (S200). If yes, then it broadcasts the generated event that contains the abnormality state message to any of the devices connected via BT (S105).

Furthermore, the software also checks if a cellular network, for example a 5G network, is enabled (S200), and, if yes, it broadcasts the same message to the other smart devices via device-to-device (D2D) communication capability of cellular networks (S105).

The purpose of this mechanism is that every connected device broadcasts the abnormality state message to all nearby devices. If a device is located outside the area of emergency, but still receives the abnormality message via, for example 5G, from affected devices, it will not confirm the emergency because no alarm has been received by this device. This way, the method ensures that only nearby devices will act accordingly during an emergency in a specific area.

According to the present example, all nearby smart devices are connected in the same cell tower antenna, since they are all located in the same building, creating a local network of smart devices. Smart devices which lack cell connectivity capabilities connect to the other devices via BT or Wi-Fi. The software that runs on the smart devices makes sure that the devices remain connected with each other via BT or connected to the Wi-Fi network.

Since every device executes a broadcast at the same time, every device also receives a message (S400) containing the abnormality state data from other nearby interconnected devices that broadcasted. Steps S105 and S400 run in parallel because when a device transmits, it may also receive transmissions initiated by nearby devices.

When such a message is received, the software running on the device executes the validation mechanism (S401).

This mechanism validates the data included in an incoming message against the data already stored in the device itself when the abnormality state event was initiated and the data to be used for validation was stored in step S103.

If the validation mechanism reports that there is a match between the data stored in the device (state, type of event, time frame) and the data received from the nearby devices, this means that the abnormality state is confirmed. Each device realizes that there are also other nearby devices affected as the same time by the same incident. This indicates that there is a true emergency in this area and the smart device automatically initiates a call to emergency services (S402).

As a fallback mechanism, in case the validation mechanism (S401) does not result in a match between the device's own state (S103) and the event state received by the nearby devices (S400), the device informs the user of the device about its own abnormality state via well-known and already established device notification methods, e. g. an alarm notification which requires user interaction (S500).

If the user interacts with the notification, e. g. by dismissing the alarm, then the person admits that there is no danger, the alarm is ignored, and the device goes back to its initial idle state (S600).

In case, there is no human interaction to the alarm notification in a short, pre-defined time frame, then this means that the person is not capable of interacting with the device, and therefore an emergency is assumed, and the smart device automatically calls emergency services (S501).

In a similar context to the previous example, the same method is applied in different real-life scenarios. In a hydrogen production plant, an explosion occurs, setting the factory to an uncontrolled fire. The loT sensors installed in the factory detect the sudden change in temperature as well as the smoke caused by the fire. The smartwatches and smartphones people are using detect this sudden temperature change. Software installed and running on the loT sensors' platform transmits the information collected by the sensors to the smart devices, e. g. smartwatches and smartphones via Wi-Fi or BT. Specific software running on the smart devices collects the data from the loT sensors as well as the data generated by the smart devices itself when the devices detected the sudden temperature change. The rest of the flow is like in the previous example; the devices initiate an event and go into a state of abnormality where a message is generated and broadcasted to all connected nearby devices. Received messages are validated on each device, and in case the received abnormality state from nearby devices matches the device's own abnormality state then the emergency situation is confirmed, and the device automatically calls emergency services.

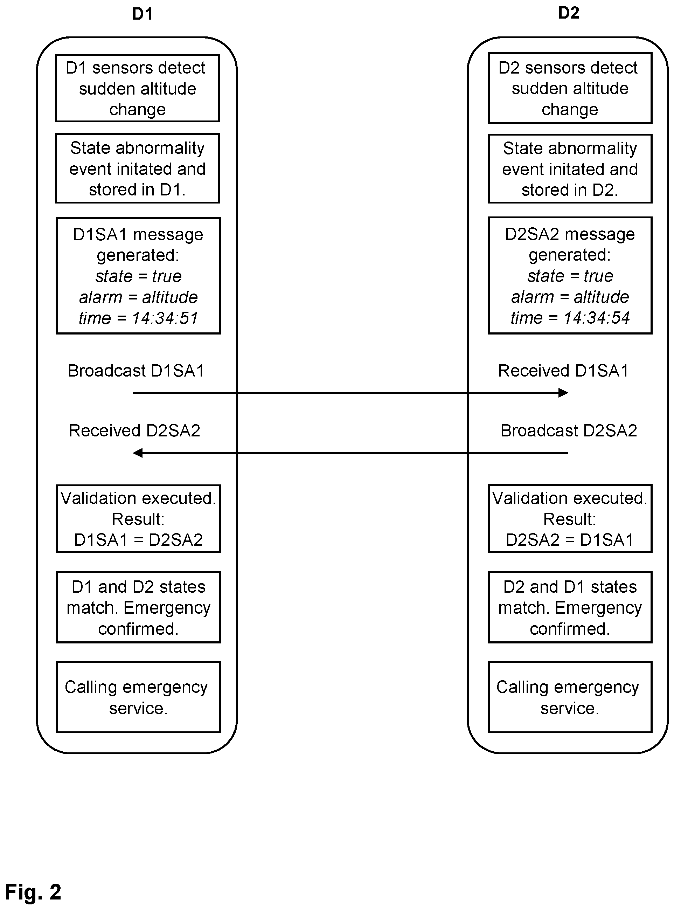

**Fig. 2** schematically shows a scenario, where two smart devices receive the same alarm from built-in sensors. In this scenario, smart devices D1 and D2 are, for example, in the same building which collapsed.

First, the built-in gyroscope, accelerometer and barometer sensors detect a sudden change in altitude in D1 and D2.

This alarm is received by the smart devices, and an abnormality state is initiated and stored in D1 (D1SA1) and D2 (D2SA2).

In the next step, the appropriate message is generated in both devices:
D1SA1 message:
   *state = true*
   *alarm = altitude*
   *time = 14:34:51*
D2SA2 message:
   *state = true*
   *alarm = altitude*
   *time = 14:34:54*

*state = true* means the device has entered an abnormality state,
*alarm = altitude* means the device has received an alarm regarding an altitude change, and
*time = 14:34:51* shows the time at which the alarm was generated.

Via an available communication protocol (Wi-Fi, Bluetooth or 5G (D2D)),
D1 broadcasts the D1SA1 message to device D2,
D2 broadcasts the D2SA2 message to device D1, and
D1 receives the message from D2,
D2 receives the message from D1.

The received D2SA2 message enters the D1 validator, and
the received D1SA1 message enters the D2 validator.

### Validator D1:

The validator compares the D2SA2 message with the D1SA1 stored in D1.
State = true for both messages, D1SA1 and D2SA2 match;
alarm = altitude for both messages, D1SA1 and D2SA2 match;
time = is validated as the messages are in the same pre-defined time frame, e. g. if the time difference is less than 10 s, D1SA1 and D2SA2 match.
The validation result in D1 is that D1SA1 and D2SA2 match.
The emergency is confirmed on D1.
D1 calls an emergency service.

### Validator D2:

The validator compares the D1SA1 message with the D2SA2 stored in D2.
State = true for both messages, D1SA1 and D2SA2 match;
alarm = altitude for both messages, D1SA1 and D2SA2 match;
time = is validated as the messages are in the same pre-defined time frame, e. g. the time difference is less than 10 s, D1SA1 and D2SA2 match.
The validation result in D2 is that D2SA2 and D1SA1 match.
The emergency is confirmed on D2.
D2 calls an emergency service.

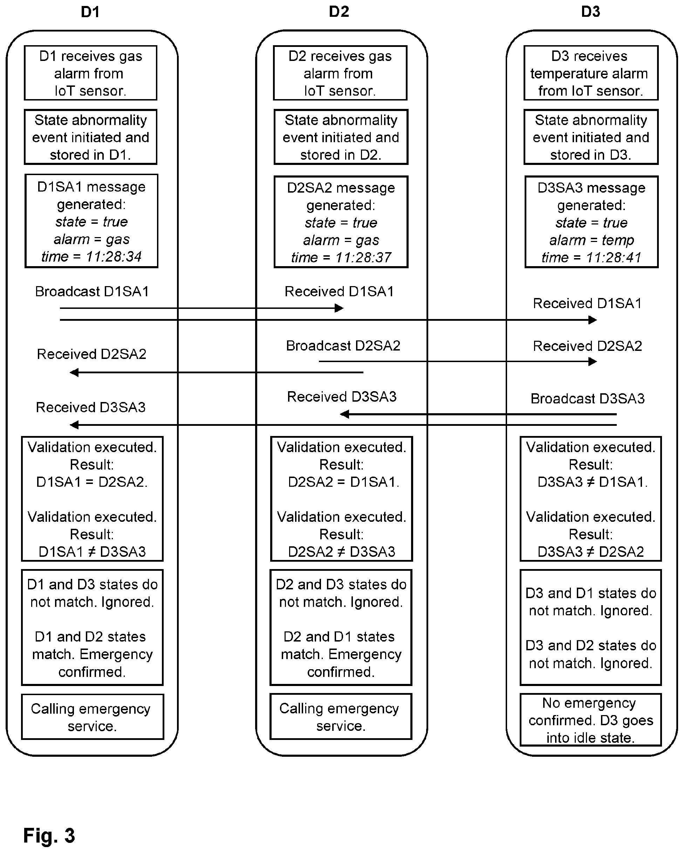

**Fig. 3** schematically shows a scenario, where two smart devices receive a gas alarm from loT sensors, and a further device receives a temperature alarm from a different loT sensor.

In this scenario, D1, D2 and D3 are smart devices located in the same building but D3 is on a different floor.

D1 and D2 receive a gas leak alarm from the nearby loT sensors but D3 receives a high-temperature alarm from another loT sensor.

An abnormality state is initiated and stored in D1 (D1SA1), D2 (D2SA2) and D3 (D3SA3).

The appropriate message is generated in all three devices:
D1SA1 message:
   *state = true*
   *alarm* = *gas*
   *time = 11:28:34*
D2SA2 message:
   *state = true*
   *alarm* = *gas*
   *time = 11:28:37*
D3SA3 message:
   *state* = *true*
   *alarm* = *temp*
   *time* = *11:28:41*
   *state* = *true* means the device has entered an abnormality state,
   *alarm* = *gas* means the device has received an alarm regarding a gas leak,
   *alarm = temp* means the device has received an alarm regarding a temperature change (for example, an increase), and
   *time = 11:28:34*, shows the time at which the alarm was generated.

Via an available communication protocol (Wi-Fi, Bluetooth or 5G (D2D)),
D1 broadcasts the D1SA1 message to devices D2 and D3.
D2 broadcasts the D2SA2 message to devices D1 and D3.
D3 broadcasts the D3SA3 message to devices D2 and D1.
D1 receives the messages from D2 and D3.
D2 receives the messages from D1 and D3.
D3 receives the messages from D2 and D1.

The received D2SA2 and D3SA3 messages enter the D1 validator,
the received D1SA1 and D3SA3 messages enter the D2 validator, and
the received D2SA2 and D1SA1 messages enter the D3 validator.

### Validator D1:

The validator compares the D2SA2 message with the D1SA1 stored in D1.
State = true for both messages, D1SA1 and D2SA2 match;
alarm = gas for both messages, D1SA1 and D2SA2 match;
time = is validated as the messages are in the same pre-defined time frame, e. g. the time difference is less than 10 s, D1SA1 and D2SA2 match.
The validation result in D1 is that D1SA1 and D2SA2 match.

The validator compares the D3SA3 message with the D1SA1 stored in D1.
State = true for both messages, D1SA1 and D3SA3 match;
alarm = gas for D1SA1 ≠ temp for D3SA3, D1SA1 and D3SA3 do not match;
time = is validated as the messages are in the same pre-defined time frame, e. g. the time difference is less than 10 s, D1SA1 and D3SA3 match.
The validation result in D1 is that D1SA1 and D3SA3 do not match.
At least one result from the validator is a match.
The emergency is confirmed on D1.
D1 calls an emergency service.

### Validator D2:

The validator compares the D1SA1 message with the D2SA2 stored in D2.
State = true for both messages, D2SA2 and D1SA1 match;
alarm = gas for both messages, D2SA2 and D1SA1 match;
time = is validated as the messages are in the same pre-defined time frame, e. g. the time difference is less than 10 s, D1SA1 and D2SA2 match.
The validation result in D2 is that D2SA2 and D1SA1 match.

The validator compares the D3SA3 message with the D2SA2 stored in D2.
State = true for both messages, D2SA2 and D3SA3 match;
alarm = gas for D2SA2 ≠ temp for D3SA3, D2SA2 and D3SA3 do not match;
time = is validated as the messages are in the same pre-defined time frame, e. g. the time difference is less than 10 s, D2SA2 and D3SA3 match.
The validation result in D2 is that D2SA2 and D3SA3 do not match.
At least one result from the validator is a match.
The emergency is confirmed on D2.
D2 calls an emergency service.

### Validator D3:

The validator compares the D1SA1 message with the D3SA3 stored in D3.
State = true for both messages, D3SA3 and D1SA1 match;
alarm = gas for D1SA1 ≠ temp for D3SA3 D1SA1 and D3SA3 do not match;
time = is validated as the messages are in the same pre-defined time frame, e. g. the time difference is less than 10 s, D3SA3 and D1SA1 match.
The validation result in D3 is that D3SA3 and D1SA1 do not match.

The validator compares the D2SA2 message with the D3SA3 stored in D3.
State = true for both messages, D2SA2 and D3SA3 match.
Alarm = gas for D2SA2 ≠ temp for D3SA3 D2SA2 and D3SA3 do not match;
time = is validated as the messages are in the same pre-defined time frame, e. g. the time difference is less than 10 s, D2SA2 and D3SA3 match.
The validation result in D3 is that D3SA3 and D2SA2 do not match.
The validation results in no matches.
The emergency is not confirmed on D3.
D3 does not call an emergency service.
D3 returns to the idle state.

It could have been the case, that a further device D4 located on the same floor as D3 could have received the same temperature alarm as D3 did. Therefore, there could have been a positive validation between D3 and D4 resulting in D3 and D4 calling an emergency service.

This embodiment shows a successful (D1 against D2) as well as a not successful validation (D1/D2 against D3) result.

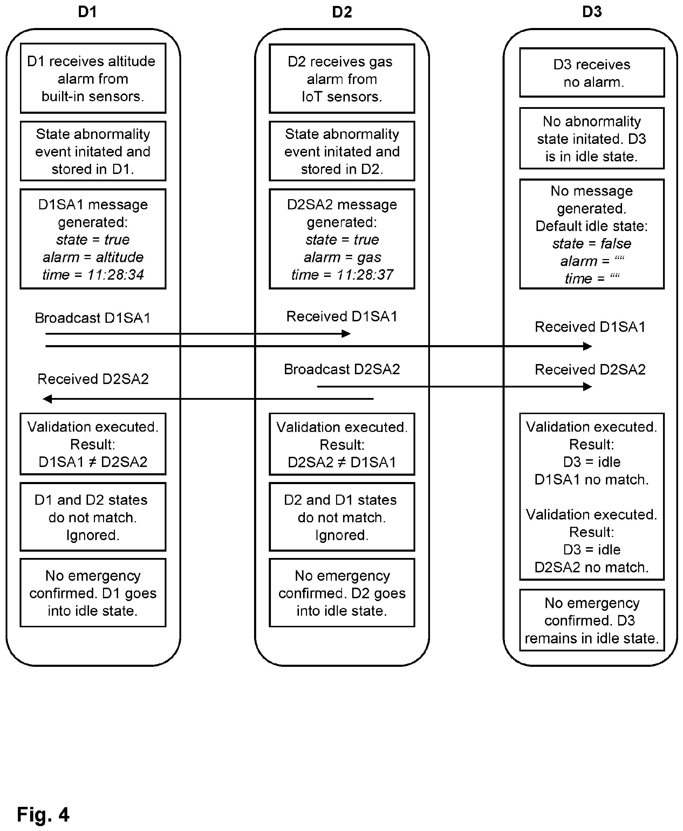

**Fig. 4** schematically shows a scenario, where three smart devices receive different or no alarm via built-in or loT sensors.

In this scenario, smart device D1 detects a sudden change of altitude (e. g. a possible fall) from the input of the built-in accelerometer, gyroscope and barometer and receives an altitude alarm from the built-in sensors. Smart device D2 detects a sudden change of gas and receives a gas alarm from an IoT sensor. Smart device D3 detects no change of the environmental attribute so that D3 receives no alarm either from built-in or loT sensors.

Therefore, an abnormality state is initiated and stored in D1 (D1SA1) and D2 (D2SA2). D3 does not go into an abnormality state.

The appropriate message is generated in D1 and D2. D3 holds the default message stored for idle state.
D1SA1 message:
   *state = true*
   *alarm = altitude*
   *time = 11:28:34*
D2SA2 message:
   *state* = *true*
   *alarm* = *gas*
   *time = 11:28:37*
D3 default idle state message:
   *state* = *false*
   *alarm* = ′‴
   *time =* ‴′

*state = true* means the device has entered an abnormality state;
*state = false* means the device has not entered an abnormality state;
*alarm = altitude* means the device has received an alarm regarding an altitude change;
*alarm* = *gas* means the device has received an alarm regarding a gas leak;
*alarm =* ‴′ means no alarm is received by the device;
*time = 11:28:34* shows the time at which the alarm was generated;
*time =* ‴′ *indicates* no time value as no alarm was generated.

Via an available communication protocol (Wi-Fi, Bluetooth or 5G (D2D)),
D1 broadcasts the D1SA1 message to devices D2 and D3.
D2 broadcasts the D2SA2 message to devices D1 and D3.
D3 does not broadcast any message to devices D2 and D1.
D1 receives the message from D2.
D2 receives the message from D1.
D3 receives the messages from D2 and D1.

The received D2SA2 message enters the D1 validator.

The received D1SA1 message enters the D2 validator.

The received D2SA2 and D1SA1 messages enter the D3 validator.

### Validator D1:

The validator compares the D2SA2 message with the D1SA1 stored in D1.
State = true for both messages, D1SA1 and D2SA2 match;
alarm = altitude for D1SA1 ≠ gas for D2SA2, D1SA1 and D2SA2 do not match;
time = is validated as the messages are in the same pre-defined time frame, e. g. the time difference is less than 10 s, D1SA1 and D2SA2 match.
The validation result in D1 is that D1SA1 and D2SA2 do not match.
The validation results in no match.
The emergency is not confirmed on D1.
D1 does not call an emergency service.
D1 returns to the idle state.

### Validator D2:

The validator compares the D1SA1 message with the D2SA2 stored in D2.
State = true for both messages, D2SA2 and D1SA1 match;
alarm = gas for D2SA2 ≠ altitude for D1SA1, D2SA2 and D1SA1 do not match;
time = is validated as the messages are in the same pre-defined time frame, e. g. the time difference is less than 10 s, D2SA2 and D1SA1 match.
The validation result in D2 is that D2SA2 and D1SA1 do not match.
The validation results in no match.
The emergency is not confirmed on D2.
D2 does not call an emergency service.
D2 returns to the idle state.

### Validator D3:

The validator compares the D1SA1 message with the default one stored in D3.
State = false for D3 ≠ true for D1SA1, D1SA1 and D3 do not match;
As soon as the "state" value is not matched, the validator provides a no match result.
The validation result in D3 is that D3 state and D1SA1 do not match.

The validator compares the D2SA2 message with the default one stored in D3.
State = false for D3 ≠ true for D2SA2, D1SA1 and D3 do not match;
As soon as "the state" value is not matched, the validator provides a no match result.
The validation result in D3 is that D3 state and D2SA2 do not match.
The validation results in no match.
The emergency is not confirmed on D3.
D3 does not call an emergency service.
D3 remains in the idle state.

It could have been the case that other nearby devices would have received the same alarms as D1 or D2. Therefore, there could have been a positive validation between these devices and D1 or D2, resulting in D1 or D2 calling an emergency service.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

| | |
|---|---|
| BT | Bluetooth |
| D1, D2, etc. | first device, second device, etc. |
| D1SA1, etc. | state abnormality of first device, etc. |
| temp | temperature |
| S101 - S600 | method steps S101 - S600 |

## Claims

1. A method for autonomously identifying an emergency, wherein the method comprising the steps of:
| | |
|---|---|
| S101 | monitoring, by an application of a first device, sensor data from at least one sensor of or connected to the first device, |
| S102 | detecting or receiving, by the application of the first device, an abnormality in the sensor data of the at least one sensor, |
| S103 | initiating abnormality state and storing, by the application of the first device, the abnormal sensor data from the at least one sensor, |
| S104 | generating, by the application of the first device, a message comprising the abnormal sensor data, |
| S105 | broadcasting, by the application of the first device, the generated message to all further devices over all types of available networks, |
| S400 | receiving, by the application of the first device, a message comprising abnormal sensor data of at least one sensor of a second or any further device, |
| S401 | validating, by the application of the first device, the abnormal sensor data of the first device, with the abnormal sensor data of the received message, and |
| S402 | automatically initiating, by the application of the first device, a call to an emergency service, in case of a match of the validated data, |
| S500 | initiating, by the application of the first device, an alarm to the first device, in case of no match of the validated data, and |
| S501 | automatically initiating, by the application of the first device, a call to an emergency service, in case the alarm is not deactivated by the user of the first device. |

2. The method according to claim 1, wherein the method further comprises the step of S200 checking, by the application of the first device, all available types of networks.

3. The method according to any of the preceding claims, wherein the network is a communication network, in particular, the communication network is one or more of a Wireless mesh network, WMN, a Wi-Fi network, a Bluetooth network, a cellular network, a data network, a telecommunications network, local area networks, LAN, and Wide Area Network (WAN).

4. The method according to any of the preceding claims, wherein the method further comprises the step of:
| | |
|---|---|
| S600 | returning, by the application of the first device, the first device into an initial idle state, in case the alarm is deactivated by the user of the first device. |

5. The method according to any of the preceding claims, wherein the first, the second, and any further device is a smart device.

6. The method according to claim 1, wherein the stored abnormal sensor data comprises:
- a flag indicating the state of the first device regarding the abnormal sensor data,
- a type of the alarm with regard to an environmental attribute, and/or
- a time at which the abnormal sensor data was generated.

7. The method according to any of the preceding claims, wherein the application of the first device detects amendments of environmental attributes using a sensor of the first device, wherein the environmental attribute is one or more of altitude, humidity, temperature, pressure, chemicals, gas, smoke, level, acceleration, and motion.

8. The method according to any one of the preceding claims, wherein the validation step S401, comprises:
- comparing, by the application of the first device, the stored abnormal sensor data of the first device with the received abnormal sensor data from the message of a second or any further device, and/or wherein the compared abnormal sensor data comprise the state of the device, the type of alarm related to an environmental attribute, and the time at which the abnormal sensor data was generated.

9. The method according to claim 8, wherein the time frame is less than 60 seconds, preferably less than 30 seconds, more preferably less than 10 seconds.

10. The method according to any of the preceding claims, wherein in case the validation matches, each connected device confirms the broadcasting stop.

11. A device which is configured to perform the method for autonomously identifying an emergency according to any of the claims 1 to 10.

12. A system for autonomously identifying an emergency, wherein the system comprises at least two devices according to claim 11.

## Patentansprüche

1. Verfahren zum autonomen Erkennen eines Notfalls, wobei das Verfahren die folgenden Schritte umfasst:
| | |
|---|---|
| S101 | Überwachen, durch eine Anwendung eines ersten Geräts, von Sensordaten von mindestens einem Sensor des ersten Geräts oder eines damit verbundenen Sensors, |
| S102 | Erkennen oder Empfangen, durch die Anwendung des ersten Geräts, einer Anomalie in den Sensordaten des mindestens einen Sensors, |
| S103 | Auslösen eines Anomalie-Zustandes und Speichern, durch die Anwendung des ersten Geräts, der abnormalen Sensordaten von dem mindestens einen Sensor, |
| S104 | Erzeugen, durch die Anwendung des ersten Geräts, einer Nachricht, die die abnormalen Sensordaten umfasst, |
| S105 | Senden, durch die Anwendung des ersten Geräts, der generierten Nachricht an alle weiteren Geräte über alle Typen verfügbarer Netzwerke, |
| S400 | Empfangen, durch die Anwendung des ersten Geräts, einer Nachricht, die abnormale Sensordaten mindestens eines Sensors eines zweiten oder eines weiteren Geräts enthält, |
| S401 | Validieren, durch die Anwendung des ersten Geräts, der abnormalen Sensordaten des ersten Geräts mit den abnormalen Sensordaten der empfangenen Nachricht, und |
| S402 | automatisches Auslösen, durch die Anwendung des ersten Geräts, eines Notrufs im Falle einer Übereinstimmung der validierten Daten, |
| S500 | Auslösen, durch die Anwendung des ersten Geräts, eines Alarms am ersten Gerät im Falle einer Nichtübereinstimmung der validierten Daten, und |
| S501 | automatisches Auslösen, durch die Anwendung des ersten Geräts, eines Notrufs, falls der Alarm vom Benutzer des ersten Geräts nicht deaktiviert wird. |

2. Verfahren nach Anspruch 1, wobei das Verfahren ferner den folgenden Schritt umfasst:
| | |
|---|---|
| S200 | Überprüfung, durch die Anwendung des ersten Geräts, aller verfügbaren Netzwerktypen. |

3. Verfahren nach einem der vorstehenden Ansprüche, wobei das Netzwerk ein Kommunikationsnetzwerk ist, insbesondere ein Kommunikationsnetzwerk bestehend aus einem oder mehreren der folgenden Netzwerke: einem drahtlosen Maschennetzwerk (Wireless Mesh Network, WMN), einem WLAN-Netzwerk, einem Bluetooth-Netzwerk, einem Mobilfunknetzwerk, einem Datennetzwerk, einem Telekommunikationsnetzwerk, lokalen Netzwerken (Local Area Networks, LAN) und Weitverkehrsnetzwerken (Wide Area Networks, WAN).

4. Verfahren nach einem der vorstehenden Ansprüche, wobei das Verfahren ferner den folgenden Schritt umfasst:
S600 Zurücksetzen, durch die Anwendung des ersten Geräts, des ersten Geräts in einen anfänglichen Ruhezustand, falls der Alarm durch den Benutzer des ersten Geräts deaktiviert wird.

5. Verfahren nach einem der vorstehenden Ansprüche, wobei das erste, das zweite und jedes weitere Gerät ein intelligentes Gerät ist.

6. Verfahren nach Anspruch 1, wobei die gespeicherten abnormalen Sensordaten Folgendes umfassen:
- ein Flag, das den Zustand des ersten Geräts in Bezug auf die abnormalen Sensordaten angibt,
- eine Art des Alarms in Bezug auf ein Umgebungsattribut und/oder
- einen Zeitpunkt, zu dem die abnormalen Sensordaten erzeugt wurden.

7. Verfahren nach einem der vorhergehenden Ansprüche, wobei die Anwendung des ersten Geräts Änderungen von Umgebungsattributen unter Verwendung eines Sensors des ersten Geräts erfasst, wobei das Umgebungsattribut eines oder mehrere der folgenden Attribute ist: Höhe, Feuchtigkeit, Temperatur, Druck, Chemikalien, Gas, Rauch, Füllstand, Beschleunigung und Bewegung.

8. Verfahren nach einem der vorhergehenden Ansprüche, wobei der Validierungsschritt S401 umfasst:
- Vergleichen, durch die Anwendung des ersten Geräts, der gespeicherten abnormalen Sensordaten des ersten Geräts mit den empfangenen abnormalen Sensordaten aus der Nachricht eines zweiten oder eines weiteren Geräts und/oder wobei die verglichenen abnormalen Sensordaten den Zustand des Geräts, die Art des Alarms in Bezug auf ein Umgebungsattribut und den Zeitpunkt, zu dem die abnormalen Sensordaten erzeugt wurden, umfassen.

9. Verfahren nach Anspruch 8, wobei der Zeitrahmen weniger als 60 Sekunden, vorzugsweise weniger als 30 Sekunden, noch bevorzugter weniger als 10 Sekunden beträgt.

10. Verfahren nach einem der vorstehenden Ansprüche, wobei im Falle einer übereinstimmenden Validierung jedes verbundene Gerät den Sendestopp bestätigt.

11. Vorrichtung, welche zur Durchführung des Verfahrens zur autonomen Identifizierung eines Notfalls gemäß einem der Ansprüche 1 bis 10 konfiguriert ist.

12. System zur autonomen Identifizierung eines Notfalls, wobei das System mindestens zwei Vorrichtungen gemäß Anspruch 11 umfasst.

## Revendications

1. Procédé permettant d'identifier de manière autonome une situation d'urgence, le procédé comprenant les étapes suivantes :
| | |
|---|---|
| S101 | surveiller, par une application d'un premier dispositif, les données provenant d'au moins un capteur du premier dispositif ou connecté à celui-ci, |
| S102 | détecter ou recevoir, par l'application du premier dispositif, une anomalie dans les données provenant du au moins un capteur, |
| S103 | déclencher un état d'anomalie et stocker, par l'application du premier dispositif, les données de capteur anormales provenant du au moins un capteur, |
| S104 | générer, par l'application du premier dispositif, un message comprenant les données de capteur anormales, |
| S105 | diffuser, par l'application du premier dispositif, le message généré à tous les autres dispositifs sur tous les types de réseaux disponibles, |
| S400 | recevoir, par l'application du premier dispositif, un message comprenant des données de capteur anormales provenant d'au moins un capteur d'un deuxième dispositif ou de tout autre dispositif supplémentaire, |
| S401 | valider, par l'application du premier dispositif, les données de capteur anormales du premier dispositif, avec les données de capteur anormales du message reçu, et |
| S402 | déclencher automatiquement, par l'application du premier dispositif, un appel vers un service d'urgence, en cas de correspondance entre les données validées, |
| S500 | déclencher, par l'application du premier dispositif, une alarme sur le premier dispositif, en cas de non-correspondance des données validées, et |
| S501 | déclencher automatiquement, par l'application du premier dispositif, un appel vers un service d'urgence, dans le cas où l'alarme n'est pas désactivée par l'utilisateur du premier dispositif. |

2. Procédé selon la revendication 1, dans lequel le procédé comprend également l'étape consistant à
| | |
|---|---|
| S200 | vérifier, par l'application du premier dispositif, tous les types de réseaux disponibles. |

3. Procédé selon l'une des revendications précédentes, dans lequel le réseau est un réseau de communication, plus particulièrement un réseau de communication constitué d'un ou plusieurs des réseaux suivants : un réseau maillé sans fil, (Wireless Mesh Network, WMN), un réseau Wi-Fi, un réseau Bluetooth, un réseau cellulaire, un réseau de données, un réseau de télécommunications, des réseaux locaux (Local Area Networks, LAN) et un réseau étendu (Wide Area Networks, WAN).

4. Procédé selon la revendication 1, dans lequel le procédé comprend également l'étape consistant à
| | |
|---|---|
| S600 | ramener, par l'application du premier dispositif, le premier dispositif dans un état inactif initial, dans le cas où l'alarme est désactivée par l'utilisateur du premier dispositif. |

5. Procédé selon l'une des revendications précédentes, dans lequel le premier, le deuxième et tout autre dispositif est un dispositif intelligent.

6. Procédé selon la revendication 1, dans lequel les données de capteur anormales stockées comprennent :
- un indicateur relatif à l'état du premier dispositif par rapport aux données de capteur anormales,
- un type d'alarme relatif à un attribut environnemental, et/ou
- une heure à laquelle les données de capteur anormales ont été générées.

7. Procédé selon l'une des revendications précédentes, dans lequel l'application du premier dispositif détecte les modifications des attributs environnementaux à l'aide d'un capteur du premier dispositif, l'attribut environnemental étant un ou plusieurs des attributs suivants : altitude, humidité, température, pression, produits chimiques, gaz, fumée, niveau, accélération et mouvement.

8. Procédé selon l'une des revendications précédentes, dans lequel l'étape de validation S401 comprend :
- comparer, par l'application du premier dispositif, les données de capteur anormales stockées du premier dispositif avec les données de capteur anormales reçues du message d'un deuxième dispositif ou de tout autre dispositif supplémentaire, et/ou dans lequel les données de capteur anormales comparées comprennent l'état du dispositif, le type d'alarme lié à un attribut environnemental et l'heure à laquelle les données de capteur anormales ont été générées.

9. Procédé selon la revendication 8, dans lequel le temps est inférieur à 60 secondes, de préférence inférieur à 30 secondes, et plus préférablement inférieur à 10 secondes.

10. Procédé selon l'une des revendications précédentes, dans lequel, en cas de correspondance de validation, chaque dispositif connecté confirme l'arrêt de la diffusion.

11. Dispositif configuré pour exécuter le procédé d'identification autonome d'une situation d'urgence selon l'une des revendications 1 à 10.

12. Système d'identification autonome d'une situation d'urgence, comprenant au moins deux dispositifs selon la revendication 11.
